# EUROPEAN PATENT APPLICATION

(11) **EP 2 134 137 A2**
(43) Date of publication of application: **16.12.2009**
(21) Application number: 09162170.6
(22) Date of filing: 08.06.2009
(51) Int. Cl.: H04W 76/02

(54) **Mobile terminal, store-and-forward multihop communication method and program**

(30) Priority: 10.06.2008 JP 2008152276
(71) Applicant: NEC Corporation, Minato-ku Tokyo (JP)
(72) Inventor: Matsui, Junichiro, Tokyo (JP); Takagi, Kazuo, Tokyo (JP); Tani, Hideaki, Tokyo (JP)
(74) Representative: Betten & Resch

(57) **Abstract**

A mobile terminal includes a mobile phone function unit (203), a communication control unit (206), and a store-and-for ward multihop communication function unit (204). The mobile phone function unit (203) confirms status of connection with a mobile base station, exchanges information with the mobile base station and stores the information in a storing unit (205) when the status of connection is a connection state. The communication control unit (206) receives connection information including the status of connection from the mobile phone function unit (203) and generates a control signal when the connection information indicates a disconnection state. The store-and-forward multihop communication function unit (204) builds a first session with a first mobile terminal after starting in response to the control signal, stores information received from the first mobile terminal and generated information in the storing unit (205), transmits information stored in the storing unit (205) after building a second session with a second mobile terminal, and stores information received from the second mobile terminal in the storing unit (205).

## Description

### Technical Field

The present invention relates to mobile terminals, and in particular, relates to a store-and-forward multihop mobile terminal.

### Background Art

Mobile terminals such as mobile phones, which have rapidly come into wide use in recent years, are serving as basic necessities of life, and as lifelines or infrastructures in place of fixed terminals such as fixed-line phones. A mobile terminal communicates with mobile base stations positioned at various places, to make a voice call and a data exchange for example. Note that a mobile base station is a parent station of a mobile terminal, which is a mobile station.

A mobile base station, which is basically placed outdoors, is susceptible to the effects of such natural disasters as earthquakes, typhoons, and water damages. In addition, an antenna of a base station, which is set at a place with a relatively good view, is subject to man-made disasters or man-made destruction. If a mobile base station suffers such disasters, mobile terminals within a coverage area of the mobile base station cannot communicate. Particularly, when a base station stops due to the occurrence of large-scale natural disasters and man-made disasters, information of one's personal safety within a coverage area of the base station cannot be transmitted outside, causing an immeasurable impact.

In such a case, one's personal safety information can be transmitted outside the coverage area, if there is a means with which mobile terminals can communicate with each other without using a base station. Japanese Laid-Open Patent Application JF-P2006-319555A discloses one example of such a means.

Fig. 1 is a block diagram showing a configuration disclosed in JP-P2006-319555A. A mobile terminal 100 includes an antenna 101, an antenna 102, an antenna 103, a mobile transmitting and receiving unit 104, a wireless LAN communication unit 105, a TV tuner 106, a communication mode switching unit 107, a mobile phone function unit 108, and a multihop communication function unit 109.

The mobile terminal 100 usually functions as a mobile phone with the antenna 102, the mobile transmitting and receiving unit 104, and the mobile phone function unit 108. When a large-scale disaster occurs, public agencies deliver disaster information by using TV systems. The mobile terminal 100 receives the disaster information at the TV tuner 106 through the antenna 101. The TV tuner 106, after receiving the disaster information, notifies the communication mode switching unit 107 of the information. The communication mode switching unit 107, after receiving the notification, turns the switch of the multihop communication function unit 109 to the ON state (enable). The multihop communication function unit 109 stars communication with a multihop communication function unit 109 of an external mobile terminal through the wireless LAN communication unit 105 and the antenna 103. In JP-P2006-319555A, hops to multihop communication function units 109 of a plurality of mobile terminals make it possible to achieve end-to-end connection and hence transfer of such information as one's safety information.

As related art, Japanese Laid-Open Patent Application JP-P2005-223722A discloses a mobile terminal and an in-vehicle terminal. In JP-P2005-223722A, a mobile terminal includes a mobile phone module unit wirelessly connected to a base station, an input unit used for making and receiving calls, an output unit such as a liquid crystal display, a P2P communication unit performing connection through P2P communication with other mobile terminals, a control unit judging which of wide area communication and P2P communication should be used based on situations, a P2P communication table memory recording a P2P communication table in which mobile phone numbers and communication identifiers are written. The mobile phone module unit includes an address book recorder, where an address book in which at least names and phone numbers are linked and kept, is recorded. The control unit, at the time of making a call from the own mobile terminal to a destination mobile terminal, judges which of P2P communication and wide area communication should be used and controls which of the mobile phone module unit and the P2P communication unit should be used.

Japanese Laid-Open Patent Application JP-P2007-067556A discloses a relay device. In JP-P2007-067556A, a wireless network includes multihop wireless units. The relay device, when nodes included in the wireless network lose their functions, is used to restore the wireless network in place of the nodes which have lost their functions. The relay device is mobile.

We have now discovered the following facts. With these existing techniques, information cannot be transferred when an end-to-end multihop path cannot be established.

In addition, with these existing techniques, voice can be lost when congestion occurs on a multihop path.

### Summary

An object of the present invention is to provide a mobile terminal that can achieve multihop communication even when an end-to-end path cannot be secured.

In order to achieve an aspect of the present invention, the present invention provides a mobile terminal including: a mobile phone function unit, a storing unit, a communication control unit, and a store-and-forward multihop communication function unit. The mobile phone function unit confirms status of connection with a mobile base station and exchanges information with the mobile base station when the status of connection is a connection state. The storing unit stores information received and generated by the mobile phone function unit. The communication control unit receives connection information including the status of connection from the mobile phone function unit and generates a control signal when the connection information indicates a disconnection state. The store-and-forward multihop communication function unit builds a first session with a first mobile terminal after starting in response to the control signal, stores information received from the first mobile terminal and generated information in the storing unit, transmits information stored in the storing unit after building a second session with a second mobile terminal, and stores information received from the second mobile terminal in the storing unit.

In order to achieve another aspect of the present invention, the present invention provides a store-and-forward multihop communication method including: confirming status of connection with a mobile base station and exchanging information with the mobile base station to store the exchanged information in a storing unit when the status of connection is a connection state; generating a control signal when the status of connection is a disconnection state; and by using a store-and-forward multihop communication function, in response to the control signal, building a first session with a first mobile terminal, storing information received from the first mobile terminal and generated information in the storing unit, transmitting information stored in the storing unit after building a second session with a second mobile terminal, and storing information received from the second mobile terminal in the storing unit.

In order to achieve another aspect of the present invention, the present invention provides a computer-readable medium including code that, when executed, causes a computer to perform a store-and-forward multihop communication method, which is the following: confirming status of connection with a mobile base station and exchanging information with the mobile base station to store the exchanged information in a storing unit when the status of connection is a connection state; generating a control signal when the status of connection is a disconnection state; and by using a store-and-forward multihop communication function, in response to the control signal, building a first session with a first mobile terminal, storing information received from the first mobile terminal and generated information in the storing unit, transmitting information stored in the storing unit after building a second session with a second mobile terminal, and storing information received from the second mobile terminal in the storing unit.

Information can be transferred to a desired destination server/terminal even without an end-to-end session.

### Brief Description of the Drawings

The above and other objects, advantages and features of the present invention will be more apparent from the following description of certain preferred embodiments taken in conjunction with the accompanying drawings, in which:

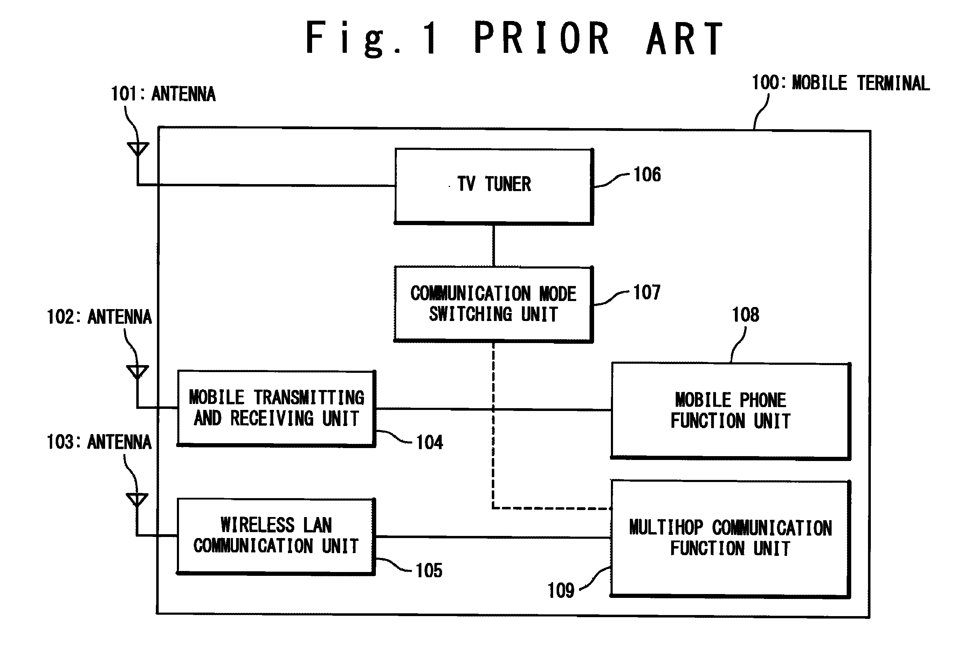

Fig. 1 is a block diagram showing a configuration disclosed in JP-P2006-319555A;
Fig. 2 is a block diagram showing a configuration of a mobile terminal according to a first exemplary embodiment of the present invention;
Fig. 3 is a flowchart showing an operation of the mobile terminal in an environment under connection with a base station according to the first exemplary embodiment;

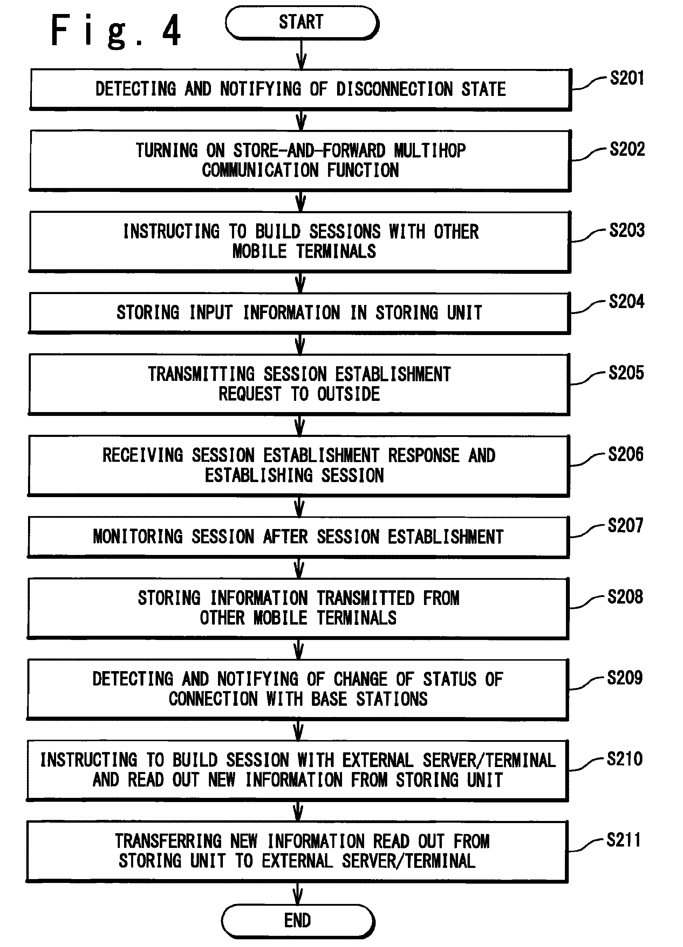

Fig. 4 is a flowchart showing an operation of the mobile terminal in an environment under disconnection with the base station according to the first exemplary embodiment;
Fig. 5 is a flowchart showing an operation of a mobile phone function unit concerning confirmation of a status of connection with the base station and notification to a communication control unit according to the first exemplary embodiment;
Fig. 6 is a flowchart showing an operation of the mobile phone function unit concerning information readout from a storing unit when the mobile phone function unit is in a connection state with the base station according to the first exemplary embodiment;
Fig. 7 is a flowchart showing an operation of the store-and-forward multihop communication function unit according to the first exemplary embodiment;
Fig. 8 is a flowchart showing an operation of the communication control unit according to the first exemplary embodiment;
Fig. 9 is a block diagram showing a configuration of a mobile terminal according to a second exemplary embodiment of the present invention;
Fig. 10 is a flowchart showing an operation of the mobile terminal in an environment under connection with a base station according to the second exemplary embodiment;
Fig. 11 is a flowchart showing an operation of the mobile terminal when the connection with a base station is in the disconnected state according to the second exemplary embodiment;
Fig. 12 is a flowchart showing an operation of a store-and-forward multihop communication function unit according to the second exemplary embodiment; and
Fig. 13 is a flowchart showing an operation of a communication control unit according to the second exemplary embodiment.

### Exemplary Embodiments

The invention will be now described herein with reference to illustrative embodiments. Those skilled in the art will recognize that many alternative embodiments can be accomplished using the teachings of the present invention and that the invention is not limited to the embodiments illustrated for explanatory purposed.

### [First embodiment

The first exemplary embodiment of the present invention will be described below with reference to the attached drawings.

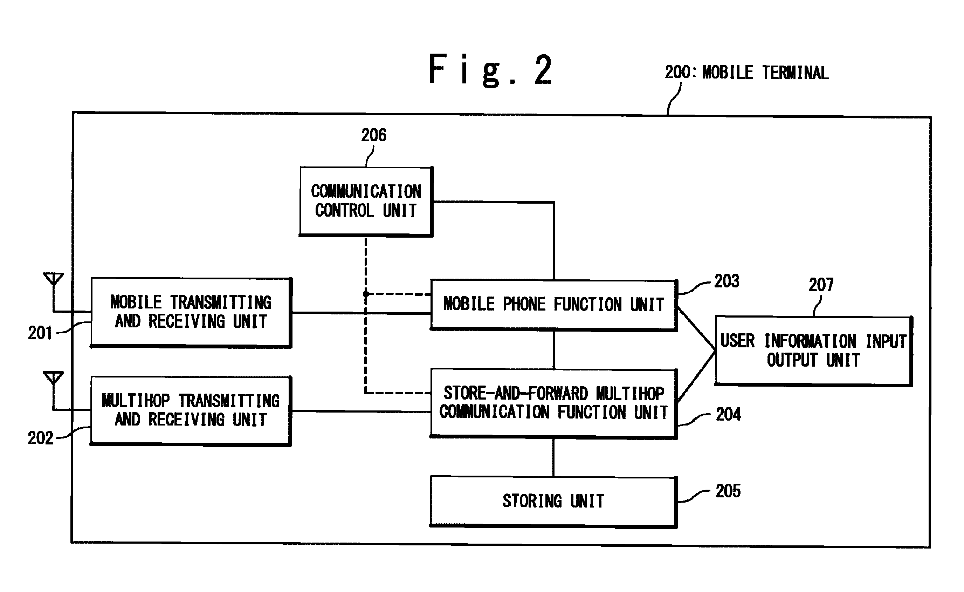

Fig. 2 is a block diagram showing a configuration of a mobile terminal according to the first exemplary embodiment of the present invention. A mobile terminal 200 includes a mobile transmitting and receiving unit 201, a multihop transmitting and receiving unit 202, a mobile phone function unit 203, a store-and-forward multihop communication function unit 204, a storing unit 205, a communication control unit 206, and a user information input and output unit 207.

The mobile transmitting and receiving unit 201 demodulates a signal sequence externally received to generate demodulated data, and transfers the demodulated data to the mobile phone function unit 203. Additionally, the mobile transmitting and receiving unit 201 modulates information from the mobile phone function unit 203 to generate modulated data, and transmits the modulated data outside.

The multihop transmitting and receiving unit 202 demodulates a signal sequence externally received to generate demodulated data, and transfers the demodulated data to the store-and-forward multihop communication function unit 204. Additionally, the multihop transmitting and receiving unit 202 modulates information from the store-and-forward multihop communication function unit 204 to generate modulated data, and transmits the modulated data outside.

The mobile phone function unit 203 recognizes input control information from the mobile transmitting and receiving unit 201 and the user information input and output unit 207, and performs acquisition of connection status information regarding a status of connection with a base station and exchange of call connection control information. Here, a base station is described as a mobile base station. The mobile phone function unit 203 notifies the communication control unit 206 of connection information indicating the status of the connection with the base station. The mobile phone function unit 203, based on an instruction from the communication control unit 206, transfers input data from the mobile transmitting and receiving unit 201, to the user information input and output unit 207 or the storing unit 205. Here, the input data includes information received from the base station. Furthermore, the mobile phone function unit 203, based on an instruction of the communication control unit 206, transfers input data from the user information input and output unit 207 or the storing unit 205 to the mobile transmitting and receiving unit 201.

The store-and-forward multihop communication function unit 204 directly establishes sessions with other mobile terminals 200 through the multihop transmitting and receiving unit 202 without base stations, based on control information concerning session establishment between the multihop transmitting and receiving unit 202 and other mobile terminals 200. Additionally, the store-and-forward multihop communication function unit 204 notifies the communication control unit 206 of the status of session establishment. The store-and-forward multihop communication function unit 204 generates control information on session establishment, and transmits the control information to the multihop transmitting and receiving unit 202. The store-and-forward multihop communication function unit 204 stores input data from the user information input and output unit 207 an the multihop transmitting and receiving unit 202 in the storing unit 205. Here, the input data is the information received from other mobile terminals 200. Additionally, the store-and-forward multihop communication function unit 204 transfers input data from the storing unit 205 to the multihop transmitting and receiving unit 202. Here, the store-and-forward multihop communication function unit 204 provides a non-connection-ready multihop communication function which is not dependent on a connection state with a base station.

The storing unit 205 stores input data from the mobile phone function unit 203 and the store-and-forward multihop communication function unit 204. Here, the input data is externally-received information. The stored input data is referred to as stored data. The storing unit 205 divides stored data into required minimum information and optional information to store them in the respective storage areas. The storing unit 205, when an information volume stored in the storage area of the required minimum information exceeds a predetermined threshold value, stores new required minimum information in the storage area of the optional information.

The communication control unit 206 notifies the store-and-forward multihop communication function unit 204 of control information or control signal about session establishment between the multihop transmitting and receiving unit 202 and other mobile terminals in response to base station connection information from the mobile phone function unit 203 to start up/shut down the store-and-forward multihop communication function unit 204. The communication control unit 206 performs readout control of the storing unit 205, based on base station connection information from the mobile phone function unit 203 and session establishment information from the store-and-forward multihop communication function unit 204. Additionally, the communication control unit 206 reads out stored data from the storing unit 205 as a result of readout control of the storing unit 205, and transmits the stored data to the mobile phone function unit 203 or the store-and-forward multihop communication function unit 204.

The user information input and output unit 207 receives control information and user information from the mobile phone function unit 203 or the store-and-forward multihop communication function unit 204. Additionally, control information and user information, which are generated by the user information input and output unit 207, are transferred to the mobile phone function unit 203 or the store-and-forward multihop communication function unit 204.

An example of each of the mobile transmitting and receiving unit 201 and the multihop transmitting and receiving unit 202 may include a communication device such as an antenna, a network adapter such as a NIC (Network Interface Card), and a communication port such as a connector. Additionally, an example of a communication line for each of the mobile transmitting and receiving unit 201 and the multihop transmitting and receiving unit 202 may include a mobile phone network, WiMAX (Worldwide Interoperability for Microwave Access), 3G (third-generation mobile phones), the Internet, a LAN (Local Area Network), a wireless LAN (Wireless LAN), a leased line, IrDA (Infrared Data Association), Bluetooth (registered trademark), and a serial communication line. However, the mobile transmitting and receiving unit 201 and the multihop transmitting and receiving unit 202 in the present invention are not limited to these examples.

An example of each of the mobile phone function unit 203, the store-and-forward multihop communication function unit 204, and the communication control unit 206 may include a processing unit such as a CPU (Central Processing Unit) and a microprocessor, or a semiconductor integrated circuit (IC) having functions similar to the processing unit. Each of the mobile phone function unit 203, the store-and-forward multihop communication function unit 204, and the communication control unit 206 may be a program for making a computer execute each function. However, the mobile phone function unit 203, the store-and-forward multihop communication function unit 204, and the communication control unit 206 in the present invention are not limited to these examples.

An example of the storing unit 205 may include a semiconductor memory device such as a memory, an external memory unit (storage) such as a hard disk, or a memory medium or media. However, the storing unit 205 in the present invention is not limited to these examples.

An example of the user information input and output unit 207 may include a combination of an input unit and an output unit. An example of the input unit may include a keyboard, a keypad, a keypad on a screen, a touch panel, a tablet, or a readout device reading out an IC chip and a memory medium or media. An example of the output unit may include a display unit such as an LCD (liquid crystal display), a PDP (plasma display) and an organic EL display (organic electroluminescence display), a projection unit such as a projector projecting display contents on a wall and a screen, or a printer unit such as a printer printing display contents on paper and the like. Alternatively, the user information input and output unit 207 may be an interface (I/F: interface) for acquiring information from external input unit and memory unit, and outputting information to external display unit and memory unit. However, the user information input and output unit 207 is not limited to these examples.

Next, an operation of the mobile terminal 200 will be described below.

### <Connection state with a base station>

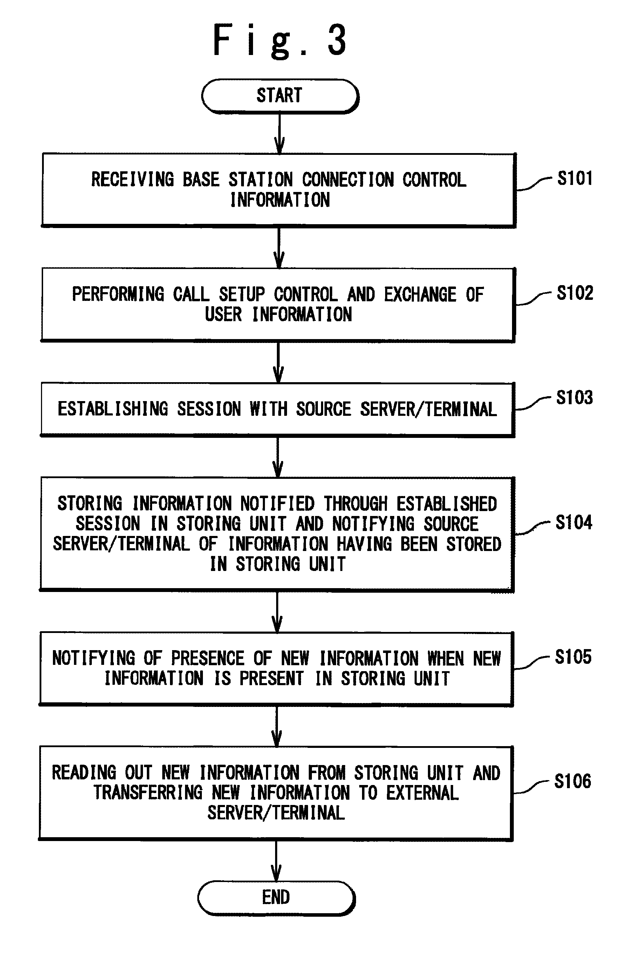

Fig. 3 is a flow chart showing an operation of the mobile terminal in an environment under connection with a base station according to the first exemplary embodiment.

### (1) Step S101

The mobile transmitting and receiving unit 201 receives base station connection control information, call setup control information, and user information transmitted from a base station, and transfers them to the mobile phone function unit 203.

### (2) Step S102

The mobile phone function unit 203, when receiving the base station connection control information, judges that connection between the own mobile terminal 200 and the base station is fine. The mobile phone function unit 203 performs call setup control based on the call setup control information and exchange of user information such as voice, as the usual mobile phone functions.

### (3) Step S103

The store-and-forward multihop communication function unit 204, under this environment, waits to receive a session establishment request. The store-and-forward multihop communication function unit 204, when receiving a session establishment request through the multihop transmitting and receiving unit 202, returns a session establishment response and establishes a session with a source server/terminal of the session establishment request.

### (4) Step S104

The store-and-forward multihop communication function unit 204 once stores information notified through the established session in the storing unit 205, and then notifies the source server/terminal of information that storing information is completed.

### (5) Step S105

After that, the store-and-forward multihop communication function unit 204 notifies the communication control unit 206 of the presence of new information in the storing unit 205. For example, the store-and-forward multihop communication function unit 204 may confirm whether new information is present in the storing unit 205, and when new information is present in the storing unit 205, notify the communication control unit 206 of the presence of new information in the storing unit 205. At this time, the store-and-forward multihop communication function unit 204 does not give notification to the communication control unit 206 when new information is not present in the storing unit 205. Alternatively, the store-and-forward multihop communication function unit 204 gives notification that new information is not present in the storing unit 205. The store-and-forward multihop communication function unit 204 may also give notification to the communication control unit 206 each time information notified through an established session is stored in the storing unit 205.

### (6) Step S106

The communication control unit 206 instructs the mobile phone function unit 203 to build a session with an external server/terminal and read out new information from the storing unit 205. After session establishment, the mobile phone function unit 203 reads out new information from the storing unit 205, and transfers the information to external server/terminal. The communication control unit 206 may specify any information stored in the storing unit 205, as information to be read out.

### <Disconnection state with a base station>

Pig. 4 is a flowchart showing an operation of the mobile terminal in an environment under disconnection with a base station according to the first exemplary embodiment.

### (1) Step S201

The mobile phone function unit 203, when detecting that connection state with the base station is turned to the disconnection state, notifies the communication control unit 206 of the disconnection state.

### (2) Step S202

The communication control unit 206 turns a connection between the user information input and output unit 207 and the store-and-forward multihop communication function unit 204 to the ON state (enable).

### (3) Step S203

The communication control unit 206 instructs the store-and-forward multihop communication function unit 204 to build sessions with other mobile terminals 200 through a control signal (startup signal) indicating startup. Here, the communication control unit 206 notifies the store-and-forward multihop communication function unit 204 of control information for building sessions with other mobile terminals 200, and starts up the store-and-forward multihop communication function unit 204.

### (4) Step S204

The store-and-forward multihop communication function unit 204 stores input information from the user information input and output unit 207 in the storing unit 205. It is preferable that information stored in the storing unit 205 includes generation source information of the information, information on a destination server/terminal, generation time information, and contents information. Here, "generation" indicates generating (creating) of information. At this time, the store-and-forward multihop communication function unit 204 adds the generation source information, the information on a destination server/terminal, and the generation time information to the contents information from the own user information input and output unit 207, and writes them to the storing unit 205.

### (5) Step S205

The store-and-forward multihop communication function unit 204 transmits information on a session establishment request to the outside through the multihop transmitting and receiving unit 202. The store-and-forward multihop communication function unit 204 continues to transmit the session establishment request regularly or at predetermined timing until receiving a session establishment response.

### (6) Step S206

The store-and-forward multihop communication function unit 204 establishes a session after receiving a session establishment response from the multihop transmitting and receiving unit 202.

### (7) Step S207

The store-and-forward multihop communication function unit 204, after the session establishment, reads out the information of the storing unit 205 and transmits the information outside through the multihop transmitting and receiving unit 202. At this time, the store-and-forwar multihop communication function unit 204 always confirms (monitors) the status of session connection through a Keep-Alive signal for example, saves the information in the storing unit 205 even if no session is established, and transmits the information outside when a session can be established again.

### (8) Step S208

The store-and-forward multihop communication function unit 204 stores information transmitted from other mobile terminals 200 in the storing unit 205. As a result, the store-and-forward multihop communication function unit 204 includes the same information as other mobile terminals 200, which have established sessions.

### (9) Step S209

The mobile phone function unit 203 gives notification to the communication control unit 206 when knowing that connection with the base station changes from the disconnection state to the connection state. Here, the mobile phone function unit 203 judges that the connection between the own mobile terminal 200 and the base station has changed from the disconnection state to the connection state when receiving base station connection control information from the base station. The mobile phone function unit 203 may always confirm the status of session connection with the base station through a Keep-Alive signal for example.

### (10) Step S210

The communication control unit 206 instructs the mobile phone function unit 203 to build a session with an external server/terminal and read out new information from the storing unit 205. At this time, the communication control unit 206 may end the store-and-forward multihop communication function unit 204 with a control signal (end signal) indicating an end.

### (11) Step S211

The mobile phone function unit 203 transfers new information read out from the storing unit 205 to an external server/terminal after session establishment.

### <Confirmation of the status of connection with a base station>

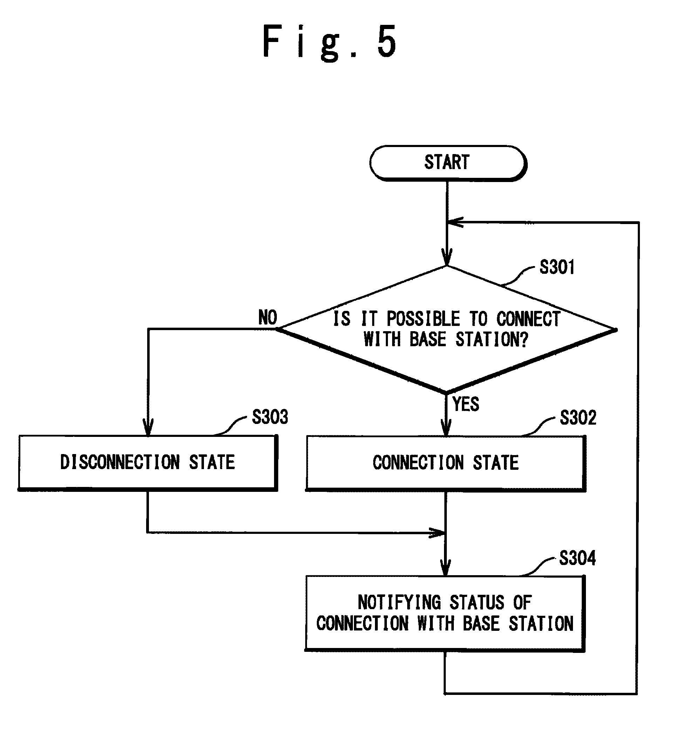

Fig. 5 is a flowchart showing an operation of the mobile phone function unit 203 concerning confirmation of the status of connection with a base station, and notification to the communication control unit 206 according to the first exemplary embodiment.

### (1) Step S301

The mobile phone function unit 203 checks (confirms) whether connection with a base station is possible or not through exchange of control signals with the base station.

### (2) Step S302

The mobile phone function unit 203 makes a judgment of the connection state when connection with the base station is possible.

### (3) Step S303

The mobile phone function unit 203 makes a judgment of the disconnection state when connection with the base station is not possible.

### (4) Step S304

The mobile phone function unit 203 notifies the communication control unit 206 of the check result. The mobile phone function unit 203 constantly confirms the connectivity with the base station after the notification.

### <Information readout under the connection state with a base station>

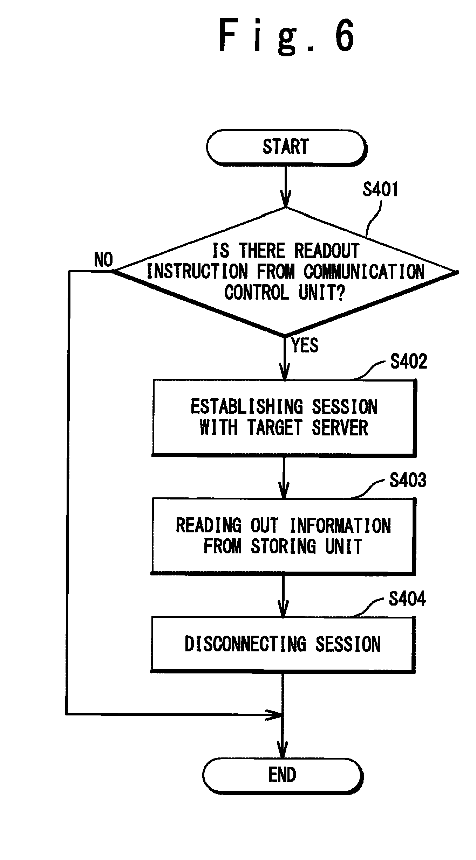

Fig. 6 is a flowchart showing an operation of the mobile phone function unit 203 concerning information readout from the storing unit 205 when the mobile phone function unit 203 is in the connection state with a base station according to the first exemplary embodiment.

### (1) Step S401

The mobile phone function unit 203 confirms presence of a readout instruction from the communication control unit 206. Here, the mobile phone function unit 203 detects generation of a readout instruction from the communication control unit 206.

### (2) Step S402

The mobile phone function unit 203, when the readout instruction from the communication control unit 206 is issued, reads out information on a destination server/terminal of each information stored in the storing unit 205 and establishes a session with a target server.

### (3) Step S403

The mobile phone function unit 203, after the session establishment, reads out information from the storing unit 205 and transfers a variety of information to a corresponding server/terminal.

### (4) Step S404

The mobile phone function unit 203, after the transfer, disconnects the session and ends communication.

### <Store-and-forward multihop communication>

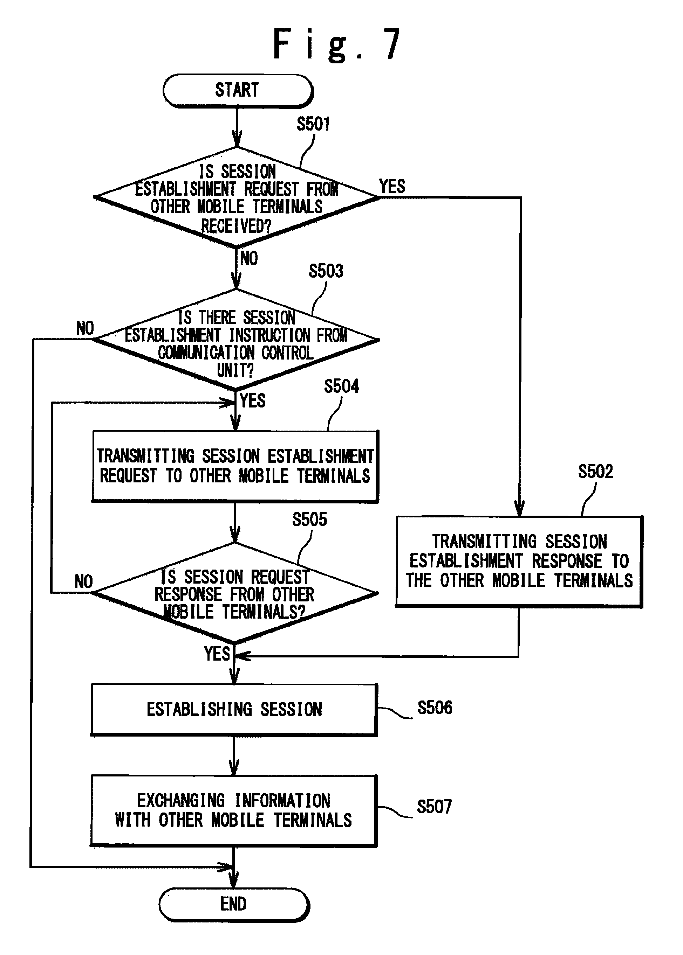

Fig. 7 is a flowchart showing an operation of the store-and-forward multihop communication function unit 204 according to the first exemplary embodiment.

### (1) Step S501

The store-and-forward multihop communication function unit 204 continuously checks whether a session establishment request from other mobile terminals 200 is received.

### (2) Step S502

The store-and-forward multihop communication function unit 204, when receiving a session establishment request from other mobile terminals 200, transmits a session establishment response to the other mobile terminals 200 transmitting the session establishment request. The store-and-forward multihop communication function unit 204, after transmitting the session establishment response, establishes a session.

### (3) Step S503

The store-and-forward multihop communication function unit 204, when a session establishment request from other mobile terminals 200 is not received, checks whether a session establishment instruction from the communication control unit 206 is present or not. The store-and-forward multihop communication function unit 204 ends processing when a session establishment instruction from the communication control unit 206 is not present. Here, a session establishment instruction from the communication control unit 206 indicates a session establishment instruction to other mobile terminals 200.

### (4) Step S504

The store-and-forward multihop communication function unit 204, when a session establishment instruction to other mobile terminals 200 is present, transmits a session establishment request to other mobile terminals 200.

### (5) Step S505

The store-and-forward multihop communication function unit 204 checks whether a session request response from other mobile terminals 200 is received or not. The store-and-forward multihop communication function unit 204, when a session request response is not received, continues to transmit session establishment requests until receiving a session request response. The store-and-forward multihop communication function unit 204 may stop transmission of session establishment requests when the number of times of transmissions of session establishment requests exceeds a predetermined number of times or a certain period of time.

### (6) Step S506

The store-and-forward multihop communication function unit 204, after receiving a session request response from other mobile terminals 200, establishes a session.

### (7) Step S507

The store-and-forward multihop communication function unit 204, after the session establishment, mutually exchanges information with other mobile terminals 200 and stores information in the storing unit 205.

### communication control>

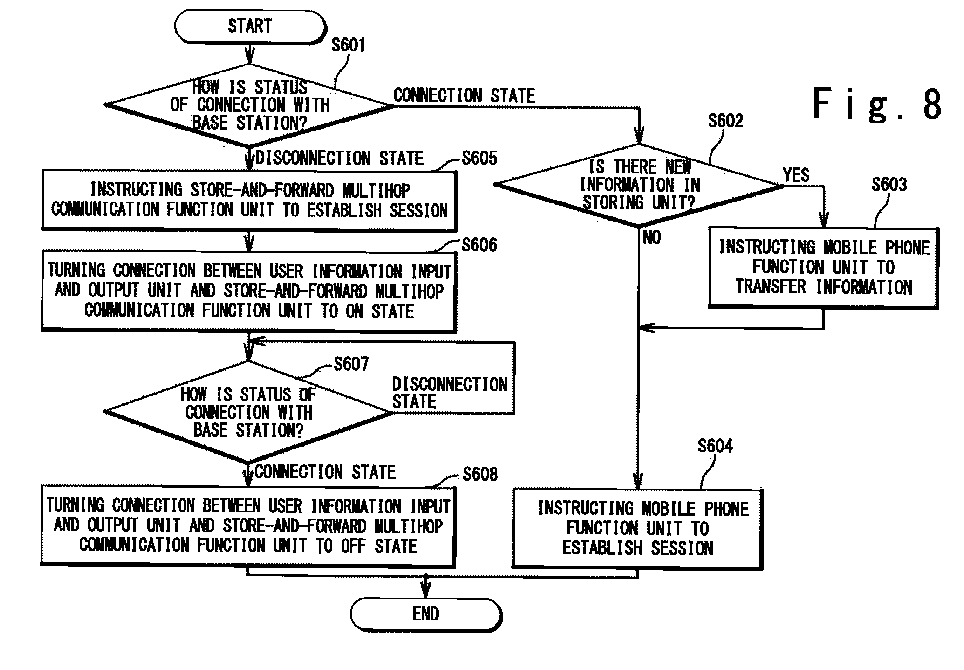

Fig. 8 is a flowchart showing an operation of the communication control unit 206 according to the first exemplary embodiment.

### (1) Step S601

The communication control unit 2 06 monitors the status of connection with a base station notified from the mobile phone function unit 203.

### (2) Step S602

The communication control unit 206 confirms whether new information is present in the storing unit 205 in the case of the connection state with the base station.

### (3) Step S603

The communication control unit 206, when new information is present, instructs the mobile phone function unit 203 to transfer the information.

### (4) Step S604

The communication control unit 206 instructs the mobile phone function unit 203 to establish a session.

### (5) Step S605

The communication control unit 206 instructs the store-and-forward multihop communication function unit 204 to establish a session in the case of the disconnection state with the base station.

### (6) Step S606

The communication control unit 206, after the session establishment by the store-and-forward multihop communication function unit 204, turns the connection between the user information input and output unit 207 and the store-and-forward multihop communication function unit 204 to the ON state (enable).

### (7) Step S607

The communication control unit 206 further checks the status of connection with the base station.

### (8) Step S608

The communication control unit 206, when the connection with the base station changes from the disconnection state to the connection state, turns the connection between the user information input and output unit 207 and the store-and-forward multihop communication function unit 204 to the OFF state (disable).

With the above operation, the mobile terminal of the present invention can achieve store-and-forward multihop information transfer.

The store-and-forward multihop communication function unit 204, when receiving information transmitted from an external mobile terminal 200, compares the transmitted information with information stored in the own storing unit 205. Then, the store-and-forward multihop communication function unit 204 does not newly store the transmitted information when generation source information, information on a destination server/terminal, and generation time information of the transmitted information correspond to those of the stored information, respectively. The store-and-forward multihop communication function unit 204 may update (renew) the stored information when generation time information is the latest.

Furthermore, the store-and-forward multihop communication function unit 204 may discard part of contents information when free space of the storing unit 205 comes close to its limit. In this case, it is desirable that contents information includes required-minimum information and optional information. The required-minimum information shows individual situations such as safe and critical, in which the status can be written with several bits. The required-minimum information may be indicated by selection numbers at the time of information input. On the other hand, the optional information, which can optionally be written by users, is information in which situations are more specifically described in text and the like.

As mentioned above, the mobile terminal 200 of the present invention can transfer information by establishing a sessions with other mobile terminals 200 even under the disconnection state with a base station due to a disaster for example. Additionally, the mobile terminal 200 of the present invention can deliver information to an end server/terminal by sending information step by step with multihops though other mobile terminals 200, even though the mobile terminals 200 cannot be connected to the end server/terminal in real time.

### [Second embodiment]

The second embodiment of the present invention will be described below.

In the first embodiment, a problem of power consumption may occur since the store-and-forward multihop communication function unit 204 is always in the ON state (enable). In addition, a non-connection multihop function may work even though a mobile terminal is merely out of service since the store-and-forward multihop communication function unit 204 is started under the disconnection from a base station. In the present embodiment, these problems are avoided.

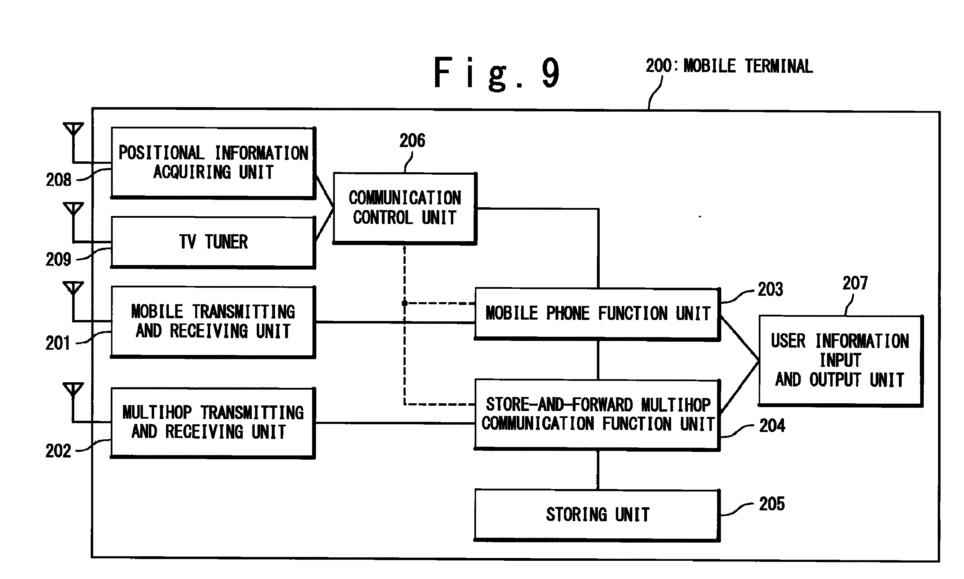

Fig. 9 is a block diagram showing a configuration of a mobile terminal according to the second exemplary embodiment of the present invention. A mobile terminal 200 includes a mobile transmitting and receiving unit 201, a multihop transmitting and receiving unit 202, a mobile phone function unit 203, a store-and-forward multihop communication function unit 204, an storing unit 205, a communication control unit 206, a user information input and output unit 207, a positional information acquiring unit 208, and a TV tuner 209.

The mobile transmitting and receiving unit 201, the multihop transmitting and receiving unit 202, the mobile phone function unit 203, the store-and-forward multihop communication function unit 204, the storing unit 205, the communication control unit 206, and the user information input and output unit 207 are basically the same as those in the case of the first embodiment.

The positional information acquiring unit 208 provides a function for calculating the position of the own terminal. The positional information acquiring unit 208 notifies the communication control unit 206 of the position of the own terminal. An example of the positional information acquiring unit 208 includes a GPS (Global Positioning System) receiver. However, the present invention is not limited to this example.

The TV tuner 209 extracts disaster information/base station state information from emergency broadcasts contained in TV signals such as 1 segment broadcasting (1seg) and transfers the disaster information/base station state information to the communication control unit 206. Note that a TV signal is merely one example. For example, the TV tuner 209 may extract disaster information/base station state information from emergency broadcasts contained in radio signals. An example of the TV tuner 209 includes a TV tuner, a one-segment tuner, a digital tuner, a USB (Universal Serial Bus) -compliant FM/AM radio tuner, and a set-top box. However, the present invention is not limited to these examples.

Processing newly added in the present embodiment will be described.

The communication control unit 206, when notified from the mobile phone function unit 203 that the status of connection with a base station is the disconnection state, receives notification of emergency information/state information of peripheral base stations from the TV tuner 209. The communication control unit 206 instructs the startup of the store-and-forward multihop communication function unit 204 when knowing that a base station connected to the own terminal or neighboring base stations have gone down (stop) based on positional information from the positional information acquiring unit 208. The base station connected to the own terminal is a base station which can directly or firstly be connected with the own terminal. Here, the base station connected to the own terminal is a base station nearest from the own terminal.

The store-and-forward multihop communication function unit 204, which always receives session establishment requests in the first embodiment, is not turned to the ON state (enable) without an instruction of the communication control unit 206 in the present embodiment. That is to say, in the present embodiment, the store-and-forwardmultihop communication function unit 204 is started by an instruction of the communication control unit 206.

### <Connection state with a base station>

First, an operation of the mobile terminal under connection with a base station will be described.

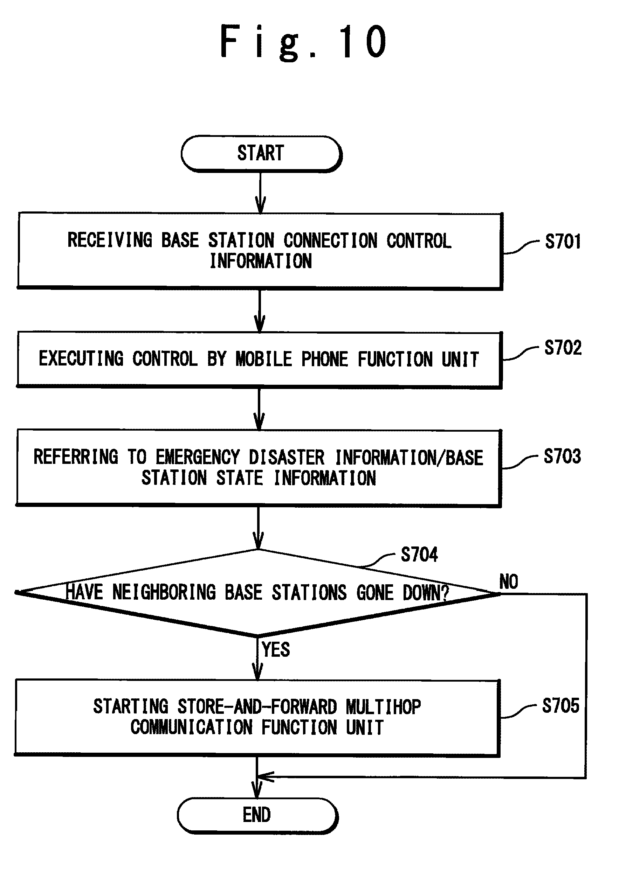

Fig. 10 is a flowchart showing an operation of the mobile terminal in an environment under connection with a base station according to the second exemplary embodiment.

### (1) Step S701

The mobile transmitting and receiving unit 201 receives base station connection control information, call setup control information, and user information transmitted from a base station, and transfers them to the mobile phone function unit 203.

### (2) Step S702

The mobile phone function unit 203 notifies the communication control unit 206 of the status of connection with a base station based on base station connection control information, and also provides usual mobile phone functions.

### (3) Step S703

The communication control unit 206, under this condition (the connection state with a base station), refers to emergency disaster information/base station state information from the TV tuner 209.

### (4) Step S704

The communication control unit 206 compares emergency disaster information/base station state information with positional information of the own terminal from the positional information acquiring unit 208, and judges whether neighboring base stations have gone down. For example, the communication control unit 206 recognizes that neighboring base stations have gone down when distances between a disaster occurrence point/location of a base station shown in emergency disaster information/base station state information, and the location of the own terminal are within a predetermined range.

### (5) Step S705

The communication control unit 206, when recognizing that neighboring base stations have gone down, issues a startup instruction to the store-and-forward multihop communication function unit 204, and starts the store-and-forward multihop communication function unit 204. When the communication control unit 206 does not recognize that neighboring base stations have gone down, the communication control unit 206 does not start the store-and-forward multihop communication function unit 204.

The operation of the store-and-forward multihop communication function unit 204 thereafter is the same as that in the first embodiment.

### <Disconnection state with a base station>

Next, an operation of the mobile terminal when connection with a base station is turned to the disconnection state will be described.

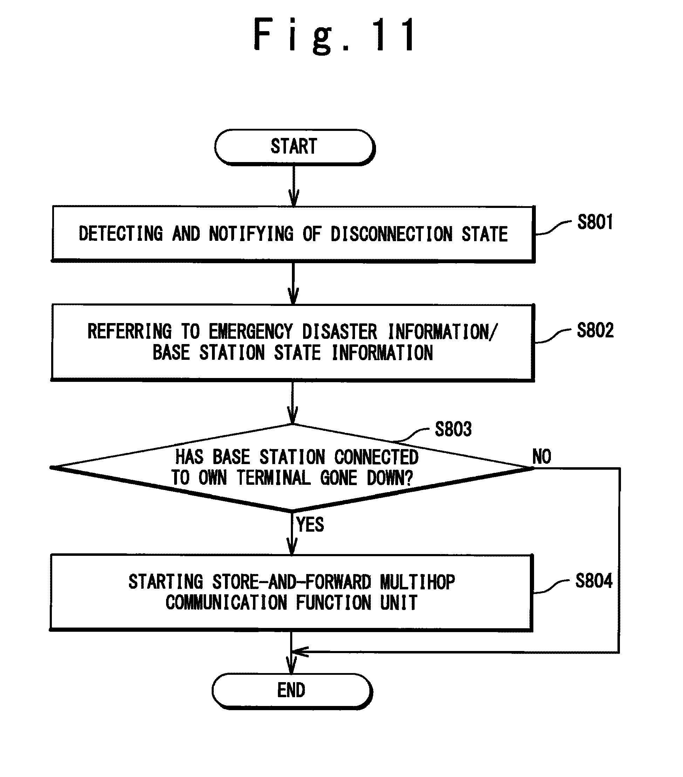

Fig. 11 is a flowchart showing an operation of the mobile terminal when the connection with a base station is in the disconnected state according to the second exemplary embodiment.

### (1) Step S801

The mobile phone function unit 203 notifies the communication control unit 206 that the connection with a base station is disconnected.

### (2) Step S802

The communication control unit 206 refers to emergency disaster information/base station state information from the TV tuner 209.

### (3) Step S803

The communication control unit 206, based on emergency disaster information/base station state information, recognizes information that a base station connected to the own terminal has gone down, and estimates that the base station connected to the own terminal has gone down. Alternatively, the communication control unit 206 refers to positional information of the own terminal from the positional information acquiring unit 208, and estimates the base station connected to the own terminal has gone down based on the comparison between positional information of the own terminal and positional information of a disaster site/base station which is based on emergency disaster information/base station state information. For example, the communication control unit 206 estimates that a base station connected to the own terminal has gone down when the distance between positional information of the own terminal and positional information of a disaster site/base station is within a predetermined range.

### (4) Step S804

The communication control unit 206, when estimating that the base station connected to the own terminal has gone down, issues a startup instruction to the store-and-forward multihop communication function unit 204 and starts the store-and-forward multihop communication function unit 204.

The operation of the store...and...forward multihop communication function unit 204 thereafter is the same as that in the first embodiment.

Next, operations of the store-and-forward multihop communication function unit 204 and the communication control unit 206 will be described. The operation of the mobile phone function unit 203 is shown in Figs. 5 and 6 in the first embodiment.

### <store-and-forward multihop communication>

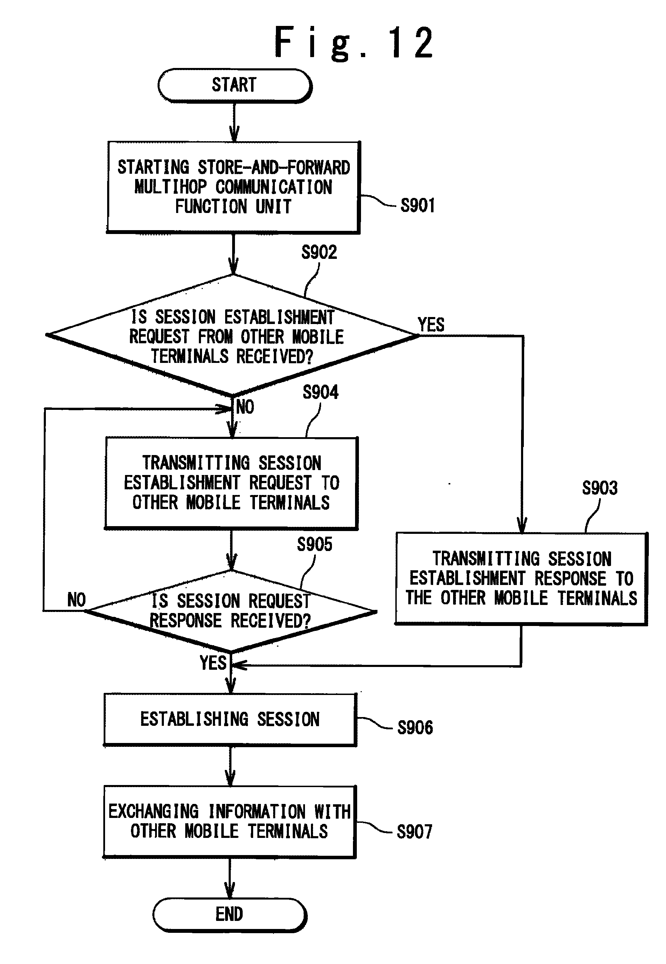

Fig. 12 is a flowchart showing an operation of the store-and-forward multihop communication function unit 204 according to the second exemplary embodiment. Difference from the operation of the store-and-forward multihop communication function unit 204 shown in Fig. 7 is that the startup is performed by the communication control unit 206.

### (1) Step S901

The store-and-forward multihop communication function unit 204 is started in response to a startup instruction from the communication control unit 206.

### (2) Step S902

The store-and-forward multihop communication function unit 204, after being started, checks whether a session establishment request from other mobile terminals 200 is received.

### (3) Step S903

The store-and-forward multihop communication function unit 204, in the case where a session establishment request from the other mobile terminals 200 is received, transmits a session establishment response to the other mobile terminals 200 transmitting the session establishment request and establishes a session.

### (4) Step S904

Additionally, the store-and-forward multihop communication function unit 204, in the case where a session establishment request from other mobile terminals 200 is not received transmits a session establishment request to other mobile terminals 200.

### (5) Step S905

The store-and-forward multihop communication function unit 204 checks whether a session request response is received from other mobile terminals 200. The store-and-forward multihop communication function unit 204, when a session request response is not received continues to transmit session establishment requests until receiving a session request response. When the number of times of transmissions of session establishment requests exceeds a predetermined number of times or a certain period of time, the store-and-forward multihop communication function unit 204 may stop transmission of session establishment requests.

### (6) Step S906

The store-and-forward multihop communication function unit 204 establishes a session when receiving a session request response from other mobile terminals 200.

### (7) Step S907

The store-and-forward multihop communication function unit 204, after the session establishment, mutually exchanges information with other mobile terminals 200 and stores information in the storing unit 205.

### communication control>

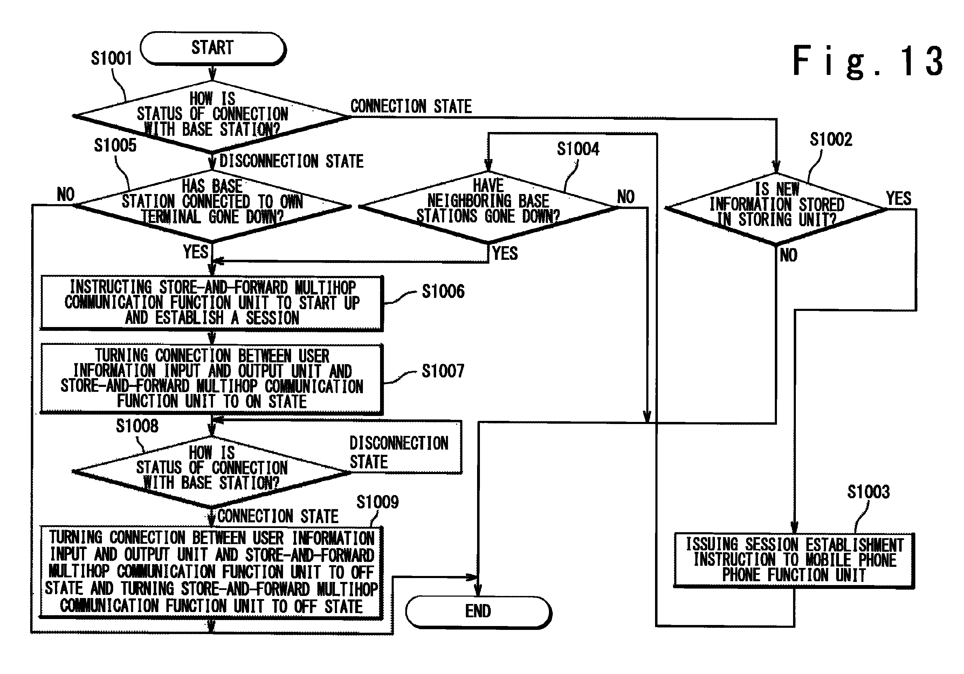

Fig. 13 is a flowchart showing an operation of the communication control unit 206 according to the second exemplary embodiment.

### (1) Step S1001

The communication control unit 206 checks the status of connection with a base station notified from the mobile phone function unit 203.

### (2) Step S1002

The communication control unit 206, when recognizing the connection state with a base station, confirms whether new information is stored in the storing unit 205.

### (3) Step S1003

The communication control unit 206, when new information is stored in the storing unit 205, issues a session establishment instruction to the mobile phone function unit 203.

### (4) Step S1004

The communication control unit 206, after issuing the session establishment instruction, instructs the store-and-forward multihop communication function unit 204 to start up and establish a session through a control signal (startup signal) if indicating startup, when the communication control unit 206 can estimate that neighboring base stations have gone down based on emergency disaster information/base station state information from the TV tuner 209 and positional information of the own terminal from the positional information acquiring unit 208. When the communication control unit 206 cannot estimate that neighboring base stations have gone down, the communication control unit 206 ends the processing. At this time, the communication control unit 206 may confirm whether emergency disaster information/base station state information from the TV tuner 209 contain information indicating that neighboring base stations have gone down. Then, the communication control unit 206 may estimate that neighboring base stations have gone down when information indicating that neighboring base stations have gone down is present.

### (5) Step S1005

Additionally, the communication control unit 206, when recognizing the disconnection state from a base station, confirms whether a base station connected to the own terminal has gone down. At this time, the communication control unit 206 estimates whether the base station connected to the own terminal has gone down or whether the own terminal is merely out of service, using emergency disaster information/base station state information from the TV tuner 209 and positional information from the positional information acquiring unit 208. The communication control unit 206 ends processing when judging that a base station connected to the own terminal is not down. That is to say, the communication control unit 206, in the case that the own terminal is merely out of service, does not instruct the store-and-forward multihop communication function unit 204 to start up and establish a session. The communication control unit 206 ends processing.

### (6) Step S1006

The communication control unit 206, when judging that a base station connected to the own terminal has gone down, instructs the store-and-forward multihop communication function unit 204 to start up and establish a session.

### (7) Step S1007

The communication control unit 206, after the session establishment instruction, turns the connection between the user information input and output unit 207 and the store-and-forward multihop communication function unit 204 to the ON state (enable).

### (8) Step S1008

The communication control unit 206, even after turning the connection between the user information input and output unit 207 and the store-and-forward multihop communication function unit 204 to the ON state (enable), monitors the status of connection between the mobile phone function unit 203 and the base station.

### (9) Step S1009

The communication control unit 206, when connection with the base station is changed from the disconnection state to the connection state, turns the connection between the user information input and output unit 207 and the store-and-forward multihop communication function unit 204 to the OFF state (disable) and turns the store-and-forward multihop communication function unit 204 to the OFF state (disable). After that, the communication control unit 206 ends processing.

In the above way, the mobile terminal 200 of the present invention can perform minimum communication even at the time of disasters. The store-and-forward multihop communication function unit 204 is turned to the ON state (enable) only when the base station is down, making it possible to reduce power consumption. In addition, a non-connection multihop function does not work when the mobile terminal is merely out of service.

As mentioned above, the present invention also relates to a method for transferring emergency information and a configuration of a mobile terminal, when connection with a base station cannot be secured.

The existing techniques establish communication between terminals through multihopping under a condition where a base station in this area is destroyed and unable to function, for example, at the time of the occurrence of a large-scale disaster. On the other hand, the mobile terminal of the present invention can exchange information by establishing sessions with neighboring mobile terminals and performing store-and-forward multihop transfer of information when communication is impossible because an end-to-end hop cannot directly be established for some reasons. That is to say, the mobile terminal of the present invention does not require a session to a desired destination server/terminal. The mobile terminal of the present invention can transfer information to a desired destination server/terminal by storing and relaying information even without an end-to-end session.

A mobile terminal of the present invention, includes: a mobile phone function unit, a storing unit, a communication control unit, and a store-and-forward multihop communication function unit. The mobile phone function unit confirms status of connection with a mobile base station and exchanges information with the mobile base station when the status of connection is a connection state. The storing unit stores information received and generated by the mobile phone function unit. The communication control unit receives connection information including the status of connection from the mobile phone function unit and generates a control signal when the connection information indicates a disconnection state. The store-and-forward multihop communication function unit builds a first session with a first mobile terminal after starting in response to the control signal, stores information received from the first mobile terminal and generated information in the storing unit, transmits information stored in the storing unit after building a second session with a second mobile terminal, and stores information received from the second mobile terminal in the storing unit.

The mobile terminal as mentioned above, further includes: a GPS function unit and a TV tuner. The GPS function unit calculates own positional information. The TV tuner receives an emergency broadcast and extract base station trouble information contained in said emergency broadcast. The communication control unit receives the own positional information from the GPS function unit, receives the base station trouble information from the TV tuner, and generates the control signal, when confirming that a trouble occurs at a own-connected base station or a neighboring base station based on the own positional information and the base station trouble information.

That is, a mobile terminal of the present invention, in a mobile network which includes a mobile base station and a plurality of mobile terminals, includes: a mobile phone function exchanging information with the mobile base station; a storing means able to store received information and generated information; and a store-and-forward multihop communication function directly building sessions with neighboring mobile terminals, additionally storing received information and generated information obtained through the sessions in the storing means, and transmitting information stored in the storing means when building a session with another mobile terminal different from the foregoing session while storing received information in the storing means. That is to say, the mobile terminal of the present invention stores received information and generated information and successively builds sessions to relay information. Here, the store-and-forward multihop communication function is always ON regardless of a condition of the base station.

Amobile terminal of the present invention, in a mobile network which includes a mobile base station and a plurality of mobile terminals, includes: a mobile phone function confirming connectivity with the mobile base station and exchanging information with the mobile base station; a communication control unit receiving connection information notified from the mobile phone function and notifying a control signal in the case of the disconnection state; an storing means able to store received information and generated information; and a store-and-forward multihop communication function being stared/ended by a control signal notifies from the communication control unit, directly building sessions with neighbouring mobile terminals after being started, additionally storing received information and generated information obtained through the sessions in the storing means, and transmitting information stored in the storing means when building a session with another mobile terminal different from the foregoing sessions while storing received information in the storing means. Here, the mobile terminal of the present invention, in which multihopping is not always ON, further has the communication control unit.

A mobile terminal of the present invention, in a mobile network which includes a mobile base station and a plurality of mobile terminals, includes: a mobile phone function confirming connectivity with the mobile base station and exchanging information with the mobile base station; a TV tuner receiving an emergency broad cast and extracting base station trouble information contained in the emergency broadcast; a communication control unit receiving connection information notified from the mobile phone function and the base station trouble information from the TV tuner, and notifying a control signal when judging that a trouble occurs at a base station connected to the own terminal or neighboring base stations; a storing means able to store received information and generated information; and a store-and-forward multihop communication function being stared/ended by a control signal notified from the communication control unit, directly building sessions with neighboring mobile terminals after being started, additionally storing received information and generated information obtained through the sessions in the storing mean, and transmitting information stored in the storing means when building a session with another mobile terminal different from the foregoing sessions while storing information received from other mobile terminals in the storing means. Here, the mobile terminal of the present invention further includes the TV tuner.

A mobile terminal of the present invention, in a mobile network which includes a mobile base station and a plurality of mobile terminals, includes: a mobile phone function confirming connectivity with the mobile base station and exchanging information with the mobile base station; a TV tuner receiving an emergency broadcast and extracting base station trouble information contained in the emergency broadcast; a GPS function calculating positional information of the own terminal; a communication control unit receiving connection information notified from the mobile phone function and the base station trouble information from the TV tuner, and notifying a control signal when judging that a trouble occurs at a base station connected to the own terminal or neighboring base stations from positional information of the own terminal notified from the GPS function; an storing means able to store received information and generated information; and a store-and-forward multihop communication function being stared/ended by a control signal notified from the communication control unit, directly building sessions with neighboring mobile terminals after being started, additionally storing received information and generated information obtained through the sessions in the storing means, and transmitting information stored in the storing means when building a session with another mobile terminal different from the foregoing sessions while storing information received from other mobile terminals in the storing means. Here, the mobile terminal of the present invention further includes the GPS.

The mobile terminal of the present invention transmits stored data when the mobile phone function is connected with a mobile base station. The mobile phone function can transmit information stored in the storing means to the mobile base station when connectivity with the mobile base station can be secured.

The storing means divides received information into required minimum information and optional information for storage, and writes new required minimum information in an optional information area when a stored information volume exceeds a certain threshold value in a required minimum information area.

As mentioned above, one of the features of the mobile terminal of the present invention is that information can be exchanged even in the case of disconnection from a base station due to a disaster and the like, by establishing sessions with neighboring mobile terminals and performing store-and-forward multihop transfer of information. At this time, a session to a desired destination server/terminal is not necessary. As a result, information can be transferred to a desired destination server/terminal by storing and relaying information even without a conventionally-required end-to-end session.

Even a mobile terminal which is not disconnected from a base station, also operates in the store-and-forward multihop mode when recognizing that neighboring base stations are down. Consequently, a probability of session establishment of neighboring mobile terminals becomes high and information can effectively transmitted to a desired server/terminal.

When a stored data volume exceeds a certain limit, the storing means can efficiently be utilized by erasing information other than minimum information.

A mobile base station is exemplified here as a base station; actually however, a base station is not limited to the mobile base station. For example, a base station may be a relay device such as a router, a switchboard, a hot sport (access point) for wireless LANs, an ISP (Internet Service Provider) server, or a specific communication terminal of periodic or always-on connection.

While the invention has been particularly shown and described witch reference to exemplary embodiments thereof, the invention is not limited to these exemplary embodiments. It will be understood by those of ordinary skill in the art that various changes in form and details may be made therein without departing from the spirit and scope of the present invention as defined by the claims.

## Claims

1. A mobile terminal comprising:
a mobile phone function unit (203) configured to confirm status of connection with a mobile base station and exchange information with said mobile base station when said status of connection is a connection state;
a storing unit (205) configured to store information received and generated by said mobile phone function unit;
a communication control unit (206) configured to receive connection information including said status of connection from said mobile phone function unit (203) and generate a control signal when said connection information indicates a disconnection state; and
a store-and-forward multihop communication function unit (204) configured to build a first session with a first mobile terminal after starting in response to said control signal, store information received from said first mobile terminal and generated information in said storing unit (205), transmit information stored in said storing unit (205) after building a second session with a second mobile terminal, and store information received from said second mobile terminal in said storing unit (205).

2. The mobile terminal according to claim 1, further comprising:
a GPS function unit (208) configured to calculate own positional information based on GPS information; and
a TV tuner (209) configured to receive an emergency broadcast and extract base station trouble information contained in said emergency broadcast,
wherein said communication control unit (206) receives said own positional information from said GPS function unit (208), receives said base station trouble information from said TV tuner (209), and generates said control signal, when confirming that a trouble occurs at a own-connected base station or a neighboring base station based on said own positional information and said base station trouble information.

3. The mobile terminal according to claim 1 or 2, wherein said mobile phone function unit (203) confirms a change of said status of connection when said status of connection is a disconnection state, and
wherein said mobile phone function unit (203) transmits information stored in said storing unit (205) when said status of connection changes to a disconnection state.

4. The mobile terminal according to any of claims 1 to 3, wherein received information is divided into required minimum information and optional information to store in respective storage areas in said storing unit (205), and
wherein said storing unit (205) stores new required minimum information in a storage area of said optional information when an information volume stored in a storage area of said required minimum information exceeds a predetermined threshold value.

5. A store-and-forward multihop communication method comprising:
confirming status of connection with a mobile base station and exchanging information with said mobile base station to store said exchanged information in a storing unit (205) when said status of connection is a connection state;
generating a control signal when said status of connection is a disconnection state; and
by using a store-and-forward multihop communication function, in response to said control signal, building a first session with a first mobile terminal, storing information received from said first mobile terminal and generated information in said storing unit (205), transmitting information stored in said storing unit (205) after building a second session with a second mobile terminal, and storing information received from said second mobile terminal in staid storing unit (205).

6. The store-and-forward multihop communication method according to claim 5, further comprising:
calculating own positional information based on GPS information; and
receiving an emergency broadcast and extracting base station trouble information contained in said emergency broadcast,
generating said control signal, when conforming that a trouble occurs at a own-connected base station or a neighboring base station based on said own positional information and said base station trouble information.

7. The store-and-forward multihop communication method according to claim 5 or 6, further comprising:
confirming a change of said status of connection when said status of connection is a disconnection state, and
transmitting information stored in said storing unit (205) when said status of connection changes to a disconnection state.

8. The store-and-forward multihop communication method according to any of claims 5 to 7, further comprising:
dividing received information into required minimum information and optional information to store in respective storage areas in said storing unit (205), and
storing new required minimum information in a storage area of said optional information when an information volume stored in a storage area of said required minimum information exceeds a predetermined threshold value.

9. Computer program product with program code means for carrying out all steps according to any of claims 5 to 8 if the program runs on a computer.

10. Computer program product with program code means according to claim 9 which are stored on a storage means which can be read by the computer.
